# EUROPEAN PATENT SPECIFICATION

(11) **EP 2 085 975 B1**
(45) Date of publication and mention of the grant of the patent: **21.08.2013**
(21) Application number: 08170611.1
(22) Date of filing: 03.12.2008
(51) Int. Cl.: G21C 15/18, F16K 15/00, F16K 17/192

(54) **Passive check valve system for a nuclear reactor**
Passives Rückschlagventilsystem für einen Kernreaktor
Vanne anti-retour à fonctionnement passif pour un réacteur nucléaire

(30) Priority: 14.12.2007 US 644
(43) Date of publication of application: 05.08.2009
(73) Proprietor: GE-Hitachi Nuclear Energy Americas LLC, Wilmington, NC 28401 (US)
(72) Inventor: Cheung, Yee Kwong, San Jose, CA 95123 (US); Melito, Joel P., Wilmington, NC 28411 (US)
(74) Representative: Cleary, Fidelma

(56) References cited:
- GB-A- 1 273 559
- JP-A- 2007 003 199
- US-A- 4 222 405
- US-A- 5 098 646
- US-A- 5 570 401
- US-A- 5 896 431
- US-A- 6 069 930

## Description

### BACKGROUND

### Technical Field

The present disclosure relates to a check valve system for a nuclear reactor.

### Description of Related Art

A conventional valve system for a nuclear reactor may include a vacuum breaker operatively connecting a wetwell and a drywell. The drywell may house a reactor pressure vessel of the nuclear reactor. The wetwell may contain a suppression pool that absorbs excess heat that is released into the drywell. As a result, steam from the drywell may be condensed by the suppression pool in the wetwell. When the pressure of the wetwell becomes greater than the pressure of the drywell, the vacuum breaker opens momentarily to reduce the pressure of the wetwell. However, the vacuum breaker may develop leakage paths over time after repeated opening/closing operations. Consequently, hot steam from the drywell may flow directly into the wetwell through the leakage paths rather than flowing through the intended passive containment cooling system. Accordingly, the leakage paths may result in a relatively high containment pressure following a loss of coolant accident.

A further example of a passive containment cooling system is disclosed in US 6069930

### SUMMARY

The present invention relates to a passive check valve system. In one embodiment, the passive check valve system includes a vacuum breaker operatively connecting a wetwell and a drywell. A discharge pool may be provided in the drywell. A housing is provided in the drywell to enclose the vacuum breaker. The housing may have one or more discharge pipes extending into the discharge pool, and the volume of the discharge pool may be greater than an interior volume of the one or more discharge pipes.

### BRIEF DESCRIPTION OF THE DRAWINGS

The features and advantages of example embodiments will become more apparent in view of the detailed description in conjunction with the accompanying drawings. The accompanying drawings are intended to depict example embodiments and should not be interpreted to limit the intended scope of the claims. The accompanying drawings are not to be considered as drawn to scale unless explicitly noted. For purposes of clarity, various dimensions of the drawings may have been exaggerated.
FIG. 1 is a schematic view of a passive check valve system according to an embodiment of the present invention.
FIG. 2 is a perspective view of a housing having a plurality of discharge pipes according to an embodiment of the present invention.

### DETAILED DESCRIPTION

It should be understood that when an element or layer is referred to as being "on", "connected to", "coupled to", or "covering" another element or layer, it may be directly on, connected to, coupled to, or covering the other element or layer or intervening elements or layers may be present. In contrast, when an element is referred to as being "directly on," "directly connected to" or "directly coupled to" another element or layer, there are no intervening elements or layers present. Like numbers refer to like elements throughout the specification. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of example embodiments.

Spatially relative terms, e.g., "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

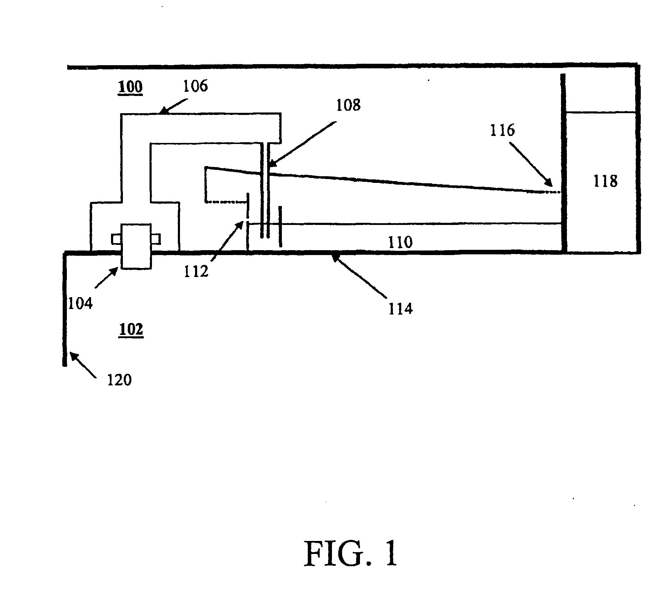

FIG. 1 is a schematic view of a passive check valve system according to an embodiment of the present invention. Referring to FIG. 1, an economic simplified boiling water reactor may include a drywell 100 adjoining a wetwell 102. A diaphragm floor 114 separates an upper portion of the wetwell 102 from the drywell 100. A discharge pool 110 may be provided on the diaphragm floor 114 in the drywell 100. A screen 116 may be provided above the discharge pool 110 to reduce or prevent debris from getting into the discharge pool 110. A gravity driven cooling system pool 118 may also be provided on the diaphragm floor 114 in the drywell 100. The gravity driven cooling system may be provided above the reactor pressure vessel (not shown) such that water from the pool 118 may supplied to the reactor pressure vessel via gravity when a relatively low water level is detected. A vacuum breaker 104 is installed in the diaphragm floor 114 so as to connect the drywell 100 and the wetwell 102. A housing 106 encloses the vacuum breaker 104 and may have a discharge pipe 108 extending into the discharge pool 110. The discharge pipe 108 may extend into the discharge pool 110 vertically or at an angle.

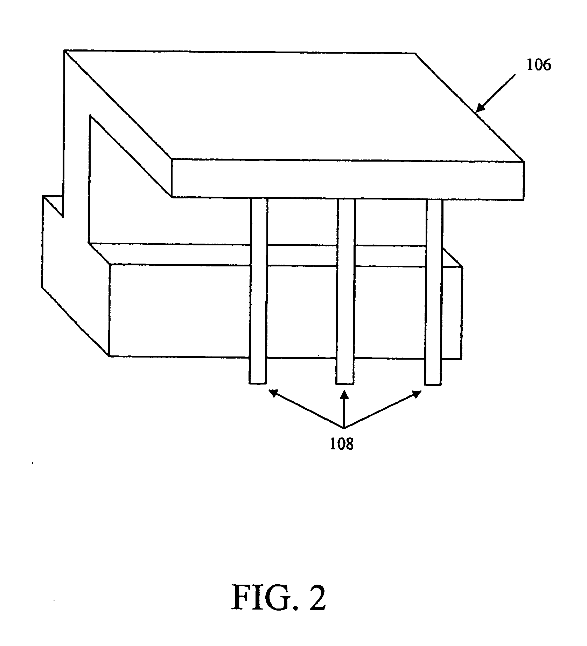

FIG. 2 is a perspective view of a housing having a plurality of discharge pipes according to an embodiment of the present invention. Referring to FIG. 2, the housing 106 may have two or more discharge pipes 108 extending in parallel. Additionally, one or more of the discharge pipes 108 may extend at an angle.

The drywell 100 may include two volumes: (1) an upper drywell volume surrounding the upper portion of a reactor pressure vessel (not shown) and housing the main steam and feedwater piping (not shown), gravity driven cooling system pools and piping (not shown), passive containment cooling system piping (not shown), isolation condenser system piping (not shown), safety relief valves and piping (not shown), depressurization valves and piping (not shown), drywell coolers and piping (not shown), and other miscellaneous systems; and (2) a lower drywell volume below the reactor pressure vessel support structure (not shown) housing the lower portion of the reactor pressure vessel (not shown), fine motion control rod drives (not shown), other miscellaneous systems and equipment below the reactor pressure vessel (not shown), and vessel bottom drain piping (not shown).

The upper drywell volume may be a cylindrical, reinforced concrete structure with a removable steel head (not shown) and a diaphragm floor 114 constructed of steel girders with concrete fill. The reactor pressure vessel support structure (not shown) may separate the lower drywell volume from the upper drywell volume. There may be an open communication path between the two drywell volumes via upper drywell to lower drywell connecting vents (not shown), which may be built into the reactor pressure vessel support structure (not shown). Penetrations through the liner for the drywell head, equipment hatches, personnel locks, piping, electrical and instrumentation lines may be provided with seals and leak-tight connections.

The drywell 100 is designed to withstand the pressure and temperature transients associated with the rupture of any primary system pipe inside the drywell 100. The drywell 100 is also designed to withstand the negative differential pressures associated with containment depressurization events, e.g., steam in the drywell 100 condensed by the passive containment cooling system (not shown), gravity driven cooling system, fuel and auxiliary pool cooling system (not shown), and cold water cascading from the break following post-loss of coolant accident flooding of the reactor pressure vessel (not shown).

The wetwell 102 may include a gas volume and a suppression pool water volume (not shown). The wetwell 102 may be connected to the drywell 100 by a vent system (not shown) having a plurality of vertical/horizontal vent modules (e.g., 12 modules). Each module may include a vertical flow steel pipe with a plurality (e.g., three) of horizontal vent pipes extending into the suppression pool water (not shown). Each vent module may be built into the vent wall 120, which separates the drywell 100 from the wetwell 102. The wetwell boundary is the annular region between the vent wall 120 and the cylindrical containment wall (not shown) and is bounded above by the drywell diaphragm floor 114. Wetted surfaces of the liner in the wetwell 102 may be stainless steel, while the other surfaces may be carbon steel. The suppression pool water (not shown) may be located inside the wetwell region. The vertical/horizontal vent system (not shown) may connect the drywell 100 to the suppression pool (not shown).

In the event of a pipe break within the drywell 100, the increased pressure inside the drywell 100 may force a mixture of noncondensable gases, steam, and water through either the passive containment cooling system (not shown) or the vertical/horizontal vent pipes (not shown) and into the suppression pool (not shown) where the steam may be rapidly condensed. The noncondensable gases transported with the steam and water may be contained in the free gas space volume of the wetwell 102.

The safety relief valves (not shown) may discharge steam through their discharge piping (equipped with a quencher discharge device) into the suppression pool (not shown). Operation of the safety relief valves may be intermittent, and closure of the valves with subsequent condensation of steam in the valve discharge piping may produce a partial vacuum, thereby drawing suppression pool water into the exhaust pipes (not shown). Vacuum relief valves (not shown) may be provided on the valve discharge piping to limit reflood water levels in the safety relief valve discharge pipes, thus controlling the maximum safety relief valve discharge bubble pressure resulting from a subsequent valve actuation and water clearing transient.

There may be sufficient water volume in the suppression pool (not shown) to provide adequate submergence of the top of the upper row of horizontal vents (not shown) and the passive containment cooling system return vent (not shown). Adequate submergence may be beneficial when the water level in the reactor pressure vessel (not shown) drops to about one meter above the top of the active fuel (not shown) following a loss of coolant accident. In such an event, water from the suppression pool will flow into the reactor pressure vessel (not shown) via the equalization lines between the reactor pressure vessel (not shown) and the suppression pool. The water inventory, including the gravity driven cooling system, may be sufficient to flood the reactor pressure vessel to at least one meter above the top of the active fuel.

The passive containment cooling system (not shown) may remove decay heat from the drywell 100 following a loss of coolant accident. The passive containment cooling system may use a plurality of elevated heat exchangers (e.g., six condensers) located outside the containment in large pools of water at atmospheric pressure to condense steam that has been released to the drywell 100 following a loss of coolant accident. The mixture of steam and noncondensable gases may be channeled to each of the condenser tube-side heat transfer surfaces where the steam condenses, and the condensate may return to one or more gravity driven cooling system pools 118 via gravity. Noncondensable gases may be purged to the suppression pool (not shown) via vent lines (not shown). The passive containment cooling system condensers may be an extension of the containment boundary. The passive containment cooling system condensers may not have isolation valves and may start operating immediately following a loss of coolant accident. These relatively low pressure passive containment cooling system condensers may provide a thermally efficient heat removal mechanism. No forced circulation equipment may be required for operation of the passive containment cooling system. Steam that is produced, due to boil-off in the pools surrounding the passive containment cooling system condensers, may be vented to the atmosphere. The water inventory in the pools may be sufficient to handle at least 72 hours of decay heat removal.

One or more vacuum breakers 104 may be provided between the drywell 100 and wetwell 102. The vacuum breaker 104 may be a process-actuated valve. The purpose of the drywell-to-wetwell vacuum breaker system is to protect the integrity of the diaphragm floor 114 and the vent wall 120 between the drywell 100 and the wetwell 102 as well as the drywell structure and liner. The vacuum breaker 104 may also reduce or prevent back-flooding of the suppression pool water (not shown) into the drywell 100. Redundant vacuum breaker systems (not shown) may be provided to protect against the failure (e.g., failure to open or close when required) of a single vacuum breaker 104.

During the operation of the economic simplified boiling water reactor, a negative pressure differential may develop across the drywell 100 and the wetwell 102 such that the wetwell pressure is greater than the drywell pressure. As a result, the vacuum breaker 104 may open so that gas may flow from the wetwell 102 to the drywell 100 and equalize the drywell and wetwell pressures. Referring to FIGS. 1-2, the housing 106 encloses the vacuum breaker 104 and directs the gas flow through one or more discharge pipes 108. The gas flow exit of the discharge pipe 108 may be submerged in the discharge pool 110 to a distance of "h" below the pool surface. The discharge pool 110 may be located on the diaphragm floor 114. The screen 116 may be installed above the discharge pool 110 to reduce or prevent the introduction of debris. The discharge pool 110 may be covered with a roof to collect condensate from the drywell wall and ceiling so as to assure that the discharge pool 110 is sufficiently filled up to the spill-over hole 112.

The spill-over hole 112 in the discharge pool 110 may ensure that the discharge pipe 108 is submerged to a distance of "h" or less. For example, "h" may be about 10.2cm - 15.2cm (4-6 inches). The flow area of the discharge pipe 108 may be equal to or greater than the flow path area of the vacuum breaker 104. For example, the flow area of the discharge pipe 108 may be about 0.09m² (1 ft²) . The length "H" of the discharge pipe 108 may be equal to or greater than about 2-3 times the submerged length of a passive containment cooling system vent line (not shown). For example, the length "H" of the discharge pipe 108 may be equal to or greater than about 2-3 m. The surface area of the discharge pool 110 may be equal to or greater than about 40-60 times the flow area of the discharge pipe 108. For example, the surface area of the discharge pool 110 may be about 3.72m² - 5.57m² (40-60 ft²). Additionally, the volume of water in the discharge pool 110 may be greater than the interior volume of the discharge pipe 108.

As discussed above, the vacuum breaker 104 may open when the wetwell pressure P_{WW} becomes greater than the drywell pressure P_{DW}. When (P_{WW} - P_{DW}) > (0.445 psi (0.03 bar) + pgh), where p is water density and g is gravitational acceleration, gas from the wetwell 102 may flow through the discharge pipe 108, clearing the column of water in the discharge pipe 108 and discharging into the drywell 100. As mentioned above, because "h" may be about 10.2cm - 15.2cm (4-6 inches), the column of water in discharge pipe 108 may be about 10.2cm - 15.2cm (4-6 inches).

On the other hand, when the drywell pressure P_{DW} becomes greater than the wetwell pressure Pww in a conventional economic simplified boiling water reactor, gas from the drywell may directly flow into the wetwell if leakage paths have developed in the vacuum breaker. In contrast, with the check valve system according to the present disclosure, when the drywell pressure P_{DW} becomes greater than the wetwell pressure P_{WW} but (P_{DW} - P_{WW}) < ρgH, the higher drywell pressure may push the water from the discharge pool 110 into the discharge pipe 108, resulting in a water column with a static head of pgx, (where h < x < H). Thus, the water column may counter the higher drywell pressure P_{DW}, thereby preventing gas in the drywell 100 from directly flowing into the wetwell 102, particularly when leakage paths have developed in the vacuum breaker 104. Furthermore, because the length "H" of the discharge pipe 108 may be equal to or greater than 2-3 m, which may be 2-3 times the submerged length of the passive containment cooling system vent line (e.g., about 1 m), the drywell gas may be diverted to flow through the passive containment cooling system (not shown) at higher drywell pressures instead of overcoming the static head in the discharge pipe 108 and flowing through to the vacuum breaker 104.

While example embodiments have been disclosed herein, it should be understood that other variations may be possible.

## Claims

1. A check valve system, comprising:
a vacuum breaker (104) operatively connecting a wetwell (102) and a drywell (100) of a nuclear reactor;
a discharge pool (110) in the drywell (100); and
a housing (106) in the drywell (100) enclosing the vacuum breaker (104), the housing (106) having one or more discharge pipes (108) wherein the discharge pipes extend into the discharge pool (110), and a volume of the discharge pool (110) is greater than an interior volume of the one or more discharge pipes (108), the discharge pipe being capable of containing a static head of water able to counterweight the pressure in the drywell.

2. The check valve system of claim 1, wherein the housing (106) includes a plurality of discharge pipes (108).

3. The check valve system of claim 2, wherein the plurality of discharge pipes (108) extend in parallel.

4. The check valve system of claim 1, wherein the one or more discharge pipes (108) extend vertically.

5. The check valve system of any of the preceding claims, wherein the one or more discharge pipes (108) extend about 10.2cm (4 inches) below a surface of the discharge pool (110).

6. The check valve system of any of the preceding claims, wherein the one or more discharge pipes (108) extend about 15.2cm (6 inches) below a surface of the discharge pool (110).

7. The check valve system of any of the preceding claims, wherein the one or more discharge pipes (108) has a length of about 2 m or more.

8. The check valve system of any of the preceding claims, wherein the vacuum breaker (104) opens when a pressure of the wetwell (102) is greater than a pressure of the drywell (100).

9. The check valve system of any of the preceding claims, wherein the one or more discharge pipes (108) has a flow area that is equal to or greater than a flow area of the vacuum breaker (104).

10. The check valve system of any of the preceding claims, wherein the one or more discharge pipes (108) has a flow area of about 0.09m² (1 ft²).

11. The check valve system of any of the preceding claims, wherein the discharge pool (110) has a surface area that is at least about 40 times a flow area of the one or more discharge pipes (108).

12. The check valve system of any of the preceding claims, wherein the discharge pool (110) has a surface area that is at least about 60 times a flow area of the one or more discharge pipes (108).

13. The check valve system of any of the preceding claims, wherein the discharge pool (110) has a spill-over hole (112) about 10.2cm (4 inches) above a bottom opening of the one or more discharge pipes (108).

14. The check valve system of any of the preceding claims, wherein the discharge pool (110) has a spill-over hole (112) about 15.2cm (6 inches) above a bottom opening of the one or more discharge pipes (108).

15. The check valve system of any of the preceding claims, further comprising:
a screen (116) covering the discharge pool (110).

## Patentansprüche

1. Rückschlagventilsystem, aufweisend:
einen Rückflussverhinderer (104), der funktionell einen Nassbereich (102) und einen Kondensationsbereich (100) eines Kernreaktors verbindet;
ein Auslassbecken (110) in dem Kondensationsbereich (100); und
ein Gehäuse (106) in dem Kondensationsbereich (100), das den Rückflussverhinderer (104) umschließt, wobei das Gehäuse (106) ein oder mehrere Auslassrohre (108) hat, wobei sich die Auslassrohre in das Auslassbecken (110) erstrecken, und ein Volumen des Auslassbeckens (110) größer als ein Innenvolumen des einen oder der mehreren Auslassrohre (108) ist, wobei das Auslassrohr in der Lage ist, eine statische Wassersäule zu enthalten, die den Druck in dem Kondensationsbereich ausgleichen kann.

2. Rückschlagventilsystem nach Anspruch 1, wobei das Gehäuse (106) mehrere Auslassrohre (108) enthält.

3. Rückschlagventilsystem nach Anspruch 2, wobei sich die mehreren Auslassrohre (108) parallel erstrecken.

4. Rückschlagventilsystem nach Anspruch 1, wobei sich das eine oder die mehreren Auslassrohre (108) vertikal erstrecken.

5. Rückschlagventilsystem nach einem der vorstehenden Ansprüche, wobei sich das eine oder die mehreren Auslassrohre (108) ca. 10,2 cm (4 Zoll) unter eine Oberfläche des Auslassbeckens (110) erstrecken.

6. Rückschlagventilsystem nach einem der vorstehenden Ansprüche, wobei sich das eine oder die mehreren Auslassrohre (108) ca. 15,2 cm (6 Zoll) unter eine Oberfläche des Auslassbeckens (110) erstrecken.

7. Rückschlagventilsystem nach einem der vorstehenden Ansprüche, wobei das eine oder die mehreren Auslassrohre (108) eine Länge von ca. 2 m oder mehr haben.

8. Rückschlagventilsystem nach einem der vorstehenden Ansprüche, wobei der Rückflussverhinderer (104) öffnet, wenn ein Druck des Nassbereichs (102) größer als ein Druck des Kondensationsbereichs (100) ist.

9. Rückschlagventilsystem nach einem der vorstehenden Ansprüche, wobei das eine oder die mehreren Auslassrohre (108) einen Strömungsquerschnitt haben, der gleich oder größer als ein Strömungsquerschnitt des Rückflussverhinderers (104) ist.

10. Rückschlagventilsystem nach einem der vorstehenden Ansprüche, wobei das eine oder die mehreren Auslassrohre (108) einen Strömungsquerschnitt von ca. 0,09 m² (1 ft²) haben.

11. Rückschlagventilsystem nach einem der vorstehenden Ansprüche, wobei das Auslassbecken (110) eine Oberfläche hat, die wenigstens das ca. 40-fache des Strömungsquerschnittes des einen oder der mehreren Auslassrohre (108) ist.

12. Rückschlagventilsystem nach einem der vorstehenden Ansprüche, wobei das Auslassbecken (110) eine Oberfläche hat, die wenigstens das ca. 60-fache des Strömungsquerschnittes des einen oder der mehreren Auslassrohre (108) ist.

13. Rückschlagventilsystem nach einem der vorstehenden Ansprüche, wobei das Auslassbecken (110) ein Überlaufloch (112) ca. 10,2 cm (4 Inches) über einer unteren Öffnung des einen oder der mehreren Auslassrohre (108) hat.

14. Rückschlagventilsystem nach einem der vorstehenden Ansprüche, wobei das Auslassbecken (110) ein Überlaufloch (112) ca. 15,2 cm (6 Inches) über einer unteren Öffnung des einen oder der mehreren Auslassrohre (108) hat.

15. Rückschlagventilsystem nach einem der vorstehenden Ansprüche, ferner aufweisend:
einen das Auslassbecken (110) überdeckenden Sieb (116).

## Revendications

1. Système de clapet anti-retour, comprenant :
un casse-vide (104) reliant fonctionnellement une partie de l'enceinte de confinement placée sous eau (102) et une partie sèche de l'enceinte (100) d'un réacteur nucléaire ;
une piscine de décharge (110) dans la partie sèche de l'enceinte (100); et
un caisson (106) dans la partie sèche de l'enceinte (100) renfermant le casse-vide (104), le caisson (106) comportant une ou plusieurs conduites de décharge (108), sachant que les conduites de décharge s'étendent dans la piscine de décharge (110), et un volume de la piscine de décharge (110) est supérieur à un volume intérieur de la ou des conduites de décharge (108), la conduite de décharge pouvant contenir une hauteur statique d'eau apte à équilibrer la pression dans la partie sèche de l'enceinte.

2. Système de clapet anti-retour selon la revendication 1, dans lequel le caisson (106) comprend une pluralité de conduites de décharge (108).

3. Système de clapet anti-retour selon la revendication 2, dans lequel la pluralité de conduites de décharge (108) s'étendent en parallèle.

4. Système de clapet anti-retour selon la revendication 1, dans lequel la ou les conduites de décharge (108) s'étendent verticalement.

5. Système de clapet anti-retour selon l'une quelconque des revendications précédentes, dans lequel la ou les conduites de décharge (108) s'étendent à environ 10,2 cm (4 pouces) sous une surface de la piscine de décharge (110).

6. Système de clapet anti-retour selon l'une quelconque des revendications précédentes, dans lequel la ou les conduites de décharge (108) s'étendent à environ 15,2 cm (6 pouces) sous une surface de la piscine de décharge (110).

7. Système de clapet anti-retour selon l'une quelconque des revendications précédentes, dans lequel la ou les conduites de décharge (108) présentent une longueur d'environ 2 m ou plus.

8. Système de clapet anti-retour selon l'une quelconque des revendications précédentes, dans lequel le casse-vide (104) s'ouvre lorsqu'une pression de la partie de l'enceinte placée sous eau (102) est supérieure à une pression de la partie sèche de l'enceinte (100).

9. Système de clapet anti-retour selon l'une quelconque des revendications précédentes, dans lequel la ou les conduites de décharge (108) présentent une section d'écoulement qui est égale ou supérieure à une section d'écoulement du casse-vide (104).

10. Système de clapet anti-retour selon l'une quelconque des revendications précédentes, dans lequel la ou les conduites de décharge (108) présentent une section d'écoulement d'environ 0,09 m² (1 ft²).

11. Système de clapet anti-retour selon l'une quelconque des revendications précédentes, dans lequel la piscine de décharge (110) présente une superficie qui vaut au moins 40 fois une section d'écoulement de la ou des conduites de décharge (108).

12. Système de clapet anti-retour selon l'une quelconque des revendications précédentes, dans lequel la piscine de décharge (110) présente une superficie qui vaut au moins 60 fois une section d'écoulement de la ou des conduites de décharge (108).

13. Système de clapet anti-retour selon l'une quelconque des revendications précédentes, dans lequel la piscine de décharge (110) comporte un trou de déversement (112) situé à environ 10,2 cm (4 pouces) au-dessus d'une ouverture basse de la ou des conduites de décharge (108).

14. Système de clapet anti-retour selon l'une quelconque des revendications précédentes, dans lequel la piscine de décharge (110) comporte un trou de déversement (112) situé à environ 15,2 cm (6 pouces) au-dessus d'une ouverture basse de la ou des conduites de décharge (108).

15. Système de clapet anti-retour selon l'une quelconque des revendications précédentes, comprenant en outre :
une grille (116) recouvrant la piscine de décharge (110).
